# EUROPÄISCHE PATENTANMELDUNG

(11) **EP 3 190 290 A1**
(43) Veröffentlichungstag der Anmeldung: **12.07.2017**
(21) Anmeldenummer: 17157631.7
(22) Anmeldetag: 27.11.2013
(51) Int. Cl.: F03D 1/06, B23Q 3/00, F03D 13/10, F03D 80/00

(54) **WINDENERGIEANLAGENROTORBLATT FÜR EINEN ROTOR MIT SPINNER**

(62) Teilanmeldung aus: 13194734.3
(71) Anmelder: Nordex Energy GmbH, 22419 Hamburg (DE)
(72) Erfinder: Lipka, Thomas, 18055 Rostock (DE)
(74) Vertreter: Hauck Patentanwaltspartnerschaft mbB

(57) **Zusammenfassung**

Positionierwerkzeug zur Montage eines Befestigungselements zur Befestigung eines Abdeckprofils an einem Windenergieanlagenrotorblatt, wobei das Windenergieanlagenrotorblatt einen Befestigungsabschnitt zur Befestigung an einer Rotornabe aufweist und das Positionierwerkzeug folgendes umfasst:
• eine Haltevorrichtung, die zur Befestigung an dem Befestigungsabschnitt in einer vorgegebenen Position relativ zu dem Befestigungsabschnitt eingerichtet ist, und
• eine Positioniervorrichtung zur Positionierung des Befestigungselements in einer vorgegebenen Anordnung relativ zu dem Windenergieanlagenrotorblatt und/oder zur Anpassung eines Abstandhalters eines Befestigungselements an einen radialen Abstand zwischen dem Abdeckprofil und dem Windenergieanlagenrotorblatt.

## Beschreibung

Die Erfindung betrifft ein Windenergieanlagenrotorblatt zur Montage an einer Rotornabe, die mit einem Spinner verkleidet ist, der eine Rotorblattöffnung aufweist.

Die Rotornaben von Windenergieanlagen weisen in der Regel besondere Aussparungen auf, die zum Durchreichen von Bauteilen oder Werkzeugen geeignet sind, um diese in die Nabe oder Gondel zu befördern oder auszutauschen. Um die Rotornabe vor Umwelteinflüssen zu schützen, kann diese mit einem Spinner verkleidet werden. Ein Spinner ist ein Gehäuse, das die Rotornabe ganz oder teilweise umschließt. Der Spinner verbessert die aerodynamischen Eigenschaften des Rotors und trägt zu einem ästhetischen Erscheinungsbild der Windenergieanlage bei. Ein Spinner bietet weiterhin den Vorteil, dass in seinem Inneren auch bei schlechtem Wetter in großer Höhe gearbeitet werden kann.

Der Spinner weist für jedes Rotorblatt eine Rotorblattöffnung auf, in die das Rotorblatt bei der Montage eingeführt werden kann. Zwischen Spinner und Rotorblatt befindet sich ein Ringspalt, der einer besonderen Abdichtung bedarf, um das Innere des Spinners vor Umwelteinflüssen zu schützen. Anderenfalls könnte insbesondere am Rotorblatt hinab laufendes Wasser ungehindert in das Innere des Spinners eindringen und die darin befindlichen, in der Regel nicht gesondert vor Umwelteinflüssen geschützten Elemente der Rotornabe schädigen.

Die Montage des Rotorblatts an der Rotornabe erfolgt zumeist in großer Höhe und nicht immer bei Windstille. Um das Rotorblatt dennoch sicher und beschädigungsfrei durch die Rotorblattöffnung im Spinner hindurch an die Rotornabe heranführen zu können, muss der Ringspalt eine erhebliche Breite von beispielsweise ungefähr 160 mm aufweisen. Im späteren Betrieb der Windenergieanlage erfolgt zudem beim Verstellen des Blatteinstellwinkels eine Relativbewegung zwischen dem Rotorblatt und der Rotorblattöffnung im Spinner, welche bei der Abdichtung des Ringspalts berücksichtigt werden muss.

Aus der Druckschrift CN 201739095 U ist ein Abdeckprofil zur Abdeckung des Ringspalts bekannt geworden. Es weist einen mittleren, konischen Abschnitt auf und zwei sich daran anschließende, kurze kreiszylindrische Abschnitte.

Das aus der Druckschrift CN 201326508 Y bekannte Abdeckprofil weist einen ebensolchen Querschnitt auf, ist jedoch in zwei halbkreisförmige Segmente unterteilt.

Aus der Druckschrift CN 202326034 U ist ein weiteres Abdeckprofil bekannt geworden, das in zwei halbkreisförmige Segmente unterteilt ist. In einem Ausführungsbeispiel werden die Segmente einander überlappend montiert.

Die beiden Druckschriften WO 2011/012664 A2 und WO 2011/012683 A2 zeigen eine Abdeckung des Ringspalts mit zwei benachbart angeordneten Ummantelungsringen. Einer der Ummantelungsringe ist an einem spinnerartigen Gehäuse befestigt, der andere am Rotorblatt.

Aus der Druckschrift EP 2 154 361 A1 ist eine Windenergieanlage bekannt geworden, bei der zur Abdeckung des Ringspalts zwei Abdeckprofile zusammenwirken. Ein erstes Abdeckprofil ist ringförmig und am Rotorblatt befestigt. Es weist einen am Rotorblatt beginnenden, konischen Abschnitt und einen sich daran anschließenden, kreiszylindrischen Abschnitt auf. Das freie Ende des kreiszylindrischen Abschnitts greift in eine Art Ringnut ein, die an einem an der Rotoröffnung des Spinners befestigten, zweiten ringförmigen Abdeckprofil ausgebildet ist. Dadurch soll das Eindringen von Wasser in den Ringspalt verhindert werden, egal ob das Wasser von der Nabe oder vom Rotorblatt aus zum Ringspalt strömt.

Aus der Druckschrift US 2010/0135607 A1 ist ein Windenergieanlagenrotorblatt bekannt geworden, das über ein Pitchlager an einer Rotornabe befestigt ist. Zwischen einem Innenring und einem Außenring des Pitchlagers ist ein Spalt ausgebildet, aus dem unter dynamischer Belastung ein Schmiermittel austreten könnte. Um dies zu verhindern, wird eine Abdeckung des Spalts mit einem ringförmigen Gummischild und einer elastischen Bürste vorgeschlagen. Gummischild und Bürste sind an dem Rotorblatt befestigt.

Besondere Schwierigkeiten können bei der Montage der Abdeckprofile auftreten. Die Oberfläche des Rotorblatts weist gegebenenfalls Unebenheiten auf, so dass zwischen dem Abdeckprofil und der Rotorblattoberfläche Spalte auftreten, die abgedichtet werden müssen. Dies erfolgt in der Regel mit einer hochviskosen Dichtmasse, welche aber nur bei trockener Umgebung verwendbar ist. Erhebliche Probleme treten auf, wenn das Rotorblatt im Bereich der Rotorblattöffnung des Spinners nicht mehr kreiszylindrisch ist, sondern bereits in ein aerodynamisches Profil des Rotorblatts übergeht. Werden herkömmliche Abdeckprofile an einem solchen Rotorblatt montiert, verformen sie sich, sodass ihr äußerer Umfang ebenfalls nicht mehr kreisrund ist, wodurch eine optimale Abdeckung der kreisrunden Rotorblattöffnung des Spinners nicht mehr gewährleistet ist.

Davon ausgehend ist es die Aufgabe der Erfindung, ein Windenergieanlagenrotorblatt mit einem Abdeckprofil zum Abdecken eines Ringspalts zur Verfügung zu stellen, das einfach zu fertigen und zu montieren ist und eine ausreichende Abdeckung des Ringspalts sicherstellt, sowie ein Verfahren zur Herstellung eines solchen Windenergieanlagenrotorblatts und ein Positionierwerkzeug zur Montage des Abdeckprofils.

Diese Aufgabe wird gelöst durch das Windenergieanlagenrotorblatt mit den Merkmalen des Anspruchs 1.

Das Windenergieanlagenrotorblatt ist zur Montage an einer Rotornabe vorgesehen, die mit einem Spinner verkleidet ist, der eine Rotorblattöffnung aufweist. Das Windenergieanlagenrotorblatt weist einen Befestigungsabschnitt zur Befestigung des Windenergieanlagenrotorblatts an der Rotornabe und einen innerhalb der Rotorblattöffnung anzuordnenden Längsabschnitt auf. Zum Abdecken eines Ringspalts zwischen dem Längsabschnitt und der Rotorblattöffnung ist ein Abdeckprofil an dem Windenergieanlagenrotorblatt befestigt, das einen kreisringförmigen äußeren Rand aufweist, wobei
- das Abdeckprofil einen kreisringförmigen inneren Rand aufweist, der einen radialen Abstand von dem Windenergieanlagenrotorblatt aufweist, und
- ein ringförmiges Abdeckelement, das an dem Windenergieanlagenrotorblatt befestigt ist und das den radialen Abstand überbrückt.

Soweit im Folgenden Begriffe wie "axial", "radial", "Längsrichtung", "Umfangsrichtung" oder ähnliche Richtungsangaben verwendet werden, beziehen sich diese stets auf den Blattanschluss des Rotorblatts mit seinem im Wesentlichen kreiszylindrischen Befestigungsabschnitt. Die Längsrichtung verläuft ausgehend vom Mittelpunkt des Befestigungsabschnitts in senkrechter Richtung zu der Ebene des Befestigungsabschnitts. Die Radialrichtung steht senkrecht auf dieser Längsrichtung, die Axialrichtung parallel dazu.

Das Windenergieanlagenrotorblatt kann für eine Windenergieanlage mit im Wesentlichen horizontaler Rotorachse bestimmt sein, insbesondere zum Betrieb mit variablem Blatteinstellwinkel. Der Befestigungsabschnitt befindet sich an der Blattwurzel und kann einen Flansch aufweisen. Der Befestigungsabschnitt kann über eine Vielzahl von Bolzen mit der Rotornabe verschraubt werden. Hierzu kann der Befestigungsabschnitt Bohrungen zur Aufnahme der Bolzen aufweisen. Die Befestigung des Befestigungsabschnitts an der Rotornabe kann an einem Lagerring eines Pitchlagers erfolgen, sodass der Blatteinstellwinkel mittels eines hierfür geeigneten Pitchantriebs verstellt werden kann.

Die Rotorblattöffnung befindet sich im Spinner. Der Spinner kann entsprechend der Anzahl der Rotorblätter mehrere Rotorblattöffnungen aufweisen. Jede Rotorblattöffnung ist kreisrund. Der innerhalb der Rotorblattöffnung anzuordnende Längsabschnitt des Rotorblatts befindet sich in Längsrichtung des Rotorblatts in einem Abstand von dem Befestigungsabschnitt, sodass der Befestigungsabschnitt und damit die Verbindung zwischen Rotorblatt und Rotornabe innerhalb des Spinners angeordnet ist. Im Bereich des Längsabschnitts weicht der Querschnitt des Windenergieanlagenrotorblatts mehr oder weniger stark von dem kreisrunden Querschnitt des Befestigungsabschnitts ab.

Das Abdeckprofil weist einen kreisringförmigen äußeren Rand auf, der so auf die Rotorblattöffnung abgestimmt ist, dass der Ringspalt zwischen Rotorblattöffnung und Windenergieanlagenrotorblatt in der vorgesehenen Weise abgedeckt wird. Das Abdeckprofil hat einen ebenfalls kreisringförmigen inneren Rand. Insbesondere kann das Abdeckprofil vollständig rotationssymmetrisch sein, was dessen Fertigung vereinfacht. Das Abdeckprofil kann aus insbesondere faserverstärktem Kunststoff oder aus metallischen Werkstoffen wie z.B. Aluminium hergestellt sein.

Der kreisringförmige innere Rand weist einen radialen Abstand von dem Windenergieanlagenrotorblatt auf. Dieser Abstand ermöglicht es, das Abdeckprofil in der vorgesehenen Art und Weise am Windenergieanlagenrotorblatt zu befestigen, auch wenn der Querschnitt des Windenergieanlagenrotorblatts im Bereich des Abdeckprofils von einer perfekten Kreisform abweicht. Solche Abweichungen können z.B. infolge von Fertigungstoleranzen oder bei zusätzlichen Verstärkungen auf der Außenseite des Windenergieanlagenrotorblatts auftreten. Der radiale Abstand kann über den gesamten Umfang des inneren Rands ausgebildet sein oder nur in einem oder mehreren Abschnitten davon. Er kann dort beispielsweise eine Größe von 2 mm oder mehr, 5 mm oder mehr oder 10 mm oder mehr aufweisen. Der Durchmesser des inneren Rands kann größer sein als ein größter Durchmesser des Windenergieanlagenrotorblatts im Bereich des inneren Rands, insbesondere um 2 mm oder mehr, 5 mm oder mehr oder 10 mm oder mehr. Der radiale Abstand wird durch ein ringförmiges Abdeckelement, das ebenfalls an dem Windenergieanlagenrotorblatt befestigt ist, überbrückt.

Der Ringspalt zwischen der Rotorblattöffnung des Spinners und dem Windenergieanlagenrotorblatt wird vollständig von dem Abdeckprofil und dem Abdeckelement abgedeckt. Abdeckprofil und Abdeckelement sind beide mittelbar oder unmittelbar an dem Windenergieanlagenrotorblatt befestigt, sodass sie bei Verstellung des Blatteinstellwinkels gemeinsam mit dem Windenergieanlagenrotorblatt um dessen Längsachse rotieren.

In einer Ausgestaltung variiert der radiale Abstand in Umfangsrichtung. Dies ist insbesondere der Fall, wenn der Längsabschnitts des Rotorblatts bereits in ein aerodynamisches Profil übergeht und daher keinen exakt kreisrunden Querschnitt besitzt. In diesem Fall weist auch der Ringspalt zwischen Rotorblattöffnung und Längsabschnitt eine variierende Breite auf. Der Abstand zwischen dem inneren Rand des Abdeckprofils und dem Windenergieanlagenrotorblatt wird an jeder Umfangsposition von dem Abdeckelement überbrückt.

Das Abdeckelement kann ebenso wie das Abdeckprofil ein- oder mehrteilig ausgebildet sein. Das Abdeckelement kann sich insbesondere auf der vom Befestigungsabschnitt abgewandten Seite des Abdeckprofils befinden. Die radiale Erstreckung des Abdeckelementes kann so gewählt werden, dass die zulässigen Transportabmessungen des Rotorblattes nicht überschritten werden, beispielsweise indem der Außendurchmesser des Abdeckelements nicht größer als 4,20 m ausgeführt wird. Das Abdeckelement kann aus einem elastischen Material bestehen und beispielsweise in Form einer Gummilippe ausgebildet sein. Das Abdeckprofil kann in Umfangsrichtung in zwei oder mehr Segmente unterteilt sein. Die Segmente können miteinander verbunden sein. An einem oder beiden Enden des Abdeckprofils bzw. eines Segments des Abdeckprofils kann ein Langloch ausgebildet sein, das bei der Montage des Abdeckprofils um das Windenergieanlagenrotorblatt herum eine exakte Anpassung des Abdeckprofils an den Umfang des Windenergieanlagenrotorblatts ermöglicht. Zwei über Langlöcher miteinander verbundene Enden des Abdeckprofils bzw. entsprechender Segmente des Abdeckprofils können insbesondere mit Hilfe einer Lasche miteinander verbunden sein.

Die Erfindung ermöglicht eine einfache und passgenaue Abdeckung des Ringspalts zwischen Rotorblattöffnung im Spinner und Rotorblatt insbesondere bei solchen Rotorblättern, deren in der Rotorblattöffnung angeordneter Längsabschnitt im Querschnitt nicht kreisförmig ist. Insbesondere behalten das Abdeckprofil und dessen äußerer, kreisförmiger Rand die im Hinblick auf die Rotorblattöffnung gewünschte Geometrie bei. Dabei kann das Abdeckprofil sogar unabhängig von der genauen Form des Längsabschnitts des Rotorblatts eingesetzt werden, weil Toleranzen durch das Abdeckelement ausgeglichen werden können. Dies gilt insbesondere auch dann, wenn für einen bestimmten Windenergieanlagentyp unterschiedliche Rotorblattvarianten eingesetzt werden sollen, beispielsweise für Schwach- und Starkwindgebiete.

In einer Ausgestaltung weist das Abdeckprofil einen Halteabschnitt auf, der sich vom inneren Rand in Richtung zu dem Befestigungsabschnitt des Rotorblatts hin erstreckt. Der Halteabschnitt kann sich im Wesentlichen in Axialrichtung erstrecken. Er kann als umlaufender, kreiszylindrischer Flansch ausgebildet sein. Alternativ kann der Halteabschnitt in mehrere Abschnitte unterteilt sein oder eine Vielzahl einzelner Laschen aufweisen. Stets befindet sich der Halteabschnitt auf einer Innenseite, d.h. auf einer zum Inneren des Spinners gewandten Seite des Abdeckprofils. Die Befestigung des Abdeckprofils über den Halteabschnitt kann damit von der Innenseite aus erfolgen und die verwendeten Befestigungsmittel sowie der Halteabschnitt selbst sind durch das Abdeckprofil vor Umgebungseinflüssen geschützt.

In einer Ausgestaltung ist das Abdeckprofil mit einer Vielzahl von verstellbaren, an den radialen Abstand zwischen Abdeckprofil und Windenergieanlagenrotorblatt angepassten Befestigungselementen an dem Windenergieanlagenrotorblatt montiert. Die Befestigungselemente können auf beliebige Art und Weise mit dem Windenergieanlagenrotorblatt und dem Abdeckprofil verbunden sein, beispielsweise durch Verkleben oder Verschrauben. Durch die Anpassung der Befestigungselemente an den gegebenenfalls variierenden, radialen Abstand halten die Befestigungselemente das Abdeckprofil in der gewünschten Anordnung und wirken gleichsam als Abstandshalter.

In einer Ausgestaltung weisen die Befestigungselemente jeweils einen Gewindestift und einen verstellbaren Anschlag auf. Der Gewindestift kann am Windenergieanlagenrotorblatt befestigt und bezogen auf das Windenergieanlagenrotorblatt in einer Radialrichtung angeordnet sein. Beispielsweise kann der Gewindestift in eine Gewindebuchse im Rotorblatt eingeschraubt oder an das Rotorblatt angeklebt werden. Zur Anpassung des Befestigungselements an den variierenden, radialen Abstand kann ein Anschlag, beispielsweise eine Mutter, durch Verdrehen relativ zum Gewindestift in die gewünschte Position gebracht werden. Auf diese Weise ist eine besonders einfache Anpassung des Befestigungselements an den jeweils gegebenen radialen Abstand möglich, wobei alle benötigten Befestigungselemente identisch ausgebildet sein können.

In einer Ausgestaltung liegt das Abdeckelement an dem Abdeckprofil an. Dadurch wird die Schnittstelle zwischen Abdeckelement und Abdeckprofil auf einfache Weise dichtend ausgebildet. Insbesondere kann das Abdeckprofil einen konischen Abschnitt aufweisen, an dem ein Rand des Abdeckelements anliegt. Das Abdeckelement kann ebenfalls einen konischen Abschnitt aufweisen, der nicht nur mit einem Rand, sondern flächig an dem konischen Abschnitt des Abdeckprofils anliegen kann. Auf eine zusätzliche Versiegelung der Schnittstelle zwischen Abdeckelement und Abdeckprofil, die mit einem hohen Aufwand hergestellt und unter Umständen regelmäßig gewartet werden muss, kann verzichtet werden.

Die oben genannte Aufgabe wird ebenfalls gelöst durch das Verfahren zur Herstellung eines Windenergieanlagenrotorblatts mit den Merkmalen des Anspruchs 7. Das Verfahren weist die folgenden Schritte auf:
- Bereitstellen eines Windenergieanlagenrotorblatts, das zur Montage an einer Rotornabe, die mit einem Spinner verkleidet ist, der eine Rotorblattöffnung aufweist, vorgesehen ist und dass einen Befestigungsabschnitt zur Befestigung des Windenergieanlagenrotorblatts an der Rotornabe und einen innerhalb der Rotorblattöffnung anzuordnenden Längsabschnitt aufweist,
- Bereitstellen eines Abdeckprofils zum Abdecken eines Ringspalts zwischen dem Längsabschnitt und der Rotorblattöffnung, wobei das Abdeckprofil einen kreisförmigen äußeren Rand und einen kreisförmigen inneren Rand aufweist,
- Anordnen und Befestigen des Abdeckprofils an dem Windenergieanlagenrotorblatt derart, dass der innere Rand einen radialen Abstand von dem Windenergieanlagenrotorblatt aufweist, und
- Anordnen und Befestigen eines Abdeckelements an dem Windenergieanlagenrotorblatt derart, dass das Abdeckelement den radialen Abstand überbrückt.

Es versteht sich, dass die Verfahrensschritte grundsätzlich in beliebiger Reihenfolge ausgeführt werden können. Zu den Merkmalen und Vorteilen des Verfahrens wird auf die vorstehenden Erläuterungen des mit dem Verfahren herstellbaren Windenergieanlagenrotorblatts verwiesen, die entsprechend gelten.

Das Verfahren erleichtert die Herstellung des Windenergieanlagenrotorblatts insbesondere dadurch, dass die Kombination von Abdeckprofil und Abdeckelement geeignet ist, bei der Montage Toleranzen in der Oberfläche des Windenergieanlagenrotorblatts zu überbrücken. Außerdem muss das Abdeckprofil nicht an das jeweilige Profil des Rotorblattes in dem Längsabschnitt angepasst werden. Das Überbrücken des zwischen Abdeckprofil und Windenergieanlagenrotorblatt verbleibenden Spalts mit dem Abdeckelement gelingt besonders einfach, wenn das Abdeckelement flexibel ist. So kann beispielsweise entweder das Abdeckprofil in das Abdeckelement zur Montage eingeschoben werden, oder das Abdeckelement wird nach der Montage des Abdeckprofils einfach umgekrempelt. Anschließend kann das Abdeckelement stramm am Abdeckprofil flächig anliegen. Alternativ könnte das Abdeckelement auch mit rechteckigem Querschnitt aus flexiblem Material ausgeführt werden, so dass es bei Montage des Abdeckprofils derart im Spalt gestaucht wird, dass dieser dicht verschlossen ist.

In einer Ausgestaltung weist das Verfahren die folgenden weiteren Schritte auf:
- Befestigen einer Vielzahl von Befestigungselementen, die verstellbare Abstandshalter aufweisen, an dem Windenergieanlagenrotorblatt,
- Anpassen der Abstandshalter an den radialen Abstand zwischen Abdeckprofil und Windenergieanlagenrotorblatt.

Durch diese zusätzlichen Schritte, die ebenfalls in beliebiger Reihenfolge ausgeführt werden können, wird die Montage des Abdeckprofils in der gewünschten Anordnung weiter vereinfacht, insbesondere wenn die Befestigungselemente mit den Abstandshaltern schon vor der Befestigung des Abdeckprofils an den radialen Abstand angepasst werden. Unabhängig von der Reihenfolge der Ausführung der einzelnen Schritte sorgen die auf das richtige Maß eingestellten Abstandshalter für einen sicheren Halt des Abdeckprofils in der gewünschten Anordnung.

Die Abstandshalter können auch an einen variierenden radialen Abstand angepasst werden, beispielsweise wenn das Windenergieanlagenrotorblatt in dem Längsabschnitt bereits in ein aerodynamisches Profil übergeht.

In einer Ausgestaltung wird an dem Windenergieanlagenrotorblatt ein Positionierwerkzeug am Befestigungsabschnitt ausgerichtet und/oder befestigt. Durch das Positionierwerkzeug wird die Anordnung und Befestigung der Befestigungselemente und/oder Abstandshalter in der gewünschten Position wesentlich vereinfacht. Ebenfalls möglich ist, das Positionierwerkzeug zur Anordnung des Abdeckelements in der vorgesehenen Position zu verwenden.

In einer Ausgestaltung wird mit dem Positionierwerkzeug eines der Befestigungselemente an dem Windenergieanlagenrotorblatt positioniert und/oder einer der Abstandshalter an den radialen Abstand zwischen Abdeckprofil und Windenergieanlagenrotorblatt angepasst. Das Positionierwerkzeug gibt unmittelbar oder mittelbar die Montageposition der Befestigungselemente und/oder Abstandshalter vor. Die Abstandhalter können insbesondere als verstellbare Anschläge ausgebildet sein, der Abstand kann jedoch auch auf andere Weise überbrückt werden, beispielsweise durch eine Klebstoffschicht.

In einer Ausgestaltung wird das Befestigungselement nach der Montage des Positionierwerkzeugs an dem Befestigungsabschnitt in eine Aufnahme des Positionierwerkzeugs eingesetzt. Dies ermöglicht, das Befestigungselement exakt in der vorgesehenen Position an das Windenergieanlagenrotorblatt heranzuführen. Insbesondere kann es in radialer Richtung in eine Aufnahme des Positionierwerkzeugs eingesetzt und an eine Oberfläche des Windenergieanlagenrotorblatts herangeführt und mit dieser verklebt werden. Man erhält so auf besonders einfache Weise eine exakte Anordnung des Abdeckprofils.

In einer Ausgestaltung wird das Abdeckelement vor einem Transport des Windenergieanlagenrotorblatts zu einem Errichtungsort der Windenergieanlage an dem Windenergieanlagenrotorblatt befestigt und das Abdeckprofil danach. Ebenfalls bereits vor dem Transport des Windenergieanlagenrotorblatts können die genannten Befestigungselemente bzw. Abstandshalter für das Abdeckprofil montiert werden. Es ist dann besonders einfach, das Abdeckprofil am Errichtungsort der Windenergieanlage in der gewünschten Anordnung und ggf. erst nach Befestigung des Windenergieanlagenrotorblatts an der Rotornabe zu montieren, weil die richtige Anordnung des Abdeckprofils durch das vormontierte Abdeckelement, an welches das Abdeckprofil angelegt werden kann, und/oder durch die in der richtigen Position vormontierten Befestigungselemente bzw. Abstandshalter wesentlich vereinfacht wird. Es wird bei vorzugsweiser Ausführung nur ein Schraubenschlüssel, eine Person und keinerlei Messwerkzeug benötigt. Durch die einfache Abdichtung mit dem Abdeckelement ist auch keine herkömmliche Abdichtung mit hochviskoser flüssiger Dichtmasse notwendig, somit können alle Arbeiten auch bei feuchtem und regnerischem Wetter ausgeführt werden. Gleichzeitig ist ein Transport des Windenergieanlagenrotorblatts mit bereits montiertem Abdeckprofil nicht erforderlich, sodass sich die Abmessungen des zu transportierenden Windenergieanlagenrotorblatts nicht wesentlich vergrößern.

Die oben genannte Aufgabe wird ebenfalls gelöst durch das Positionierwerkzeug mit den Merkmalen des Anspruchs 13. Das Positionierwerkzeug dient zur Montage eines Befestigungselements zur Befestigung eines Abdeckprofils an einem Windenergieanlagenrotorblatt, insbesondere bei einem Verfahren nach einem der Ansprüche 7 bis 12. Das Windenergieanlagenrotorblatt weist einen Befestigungsabschnitt zur Befestigung an einer Rotornabe auf und das Positionierwerkzeug umfasst folgendes:
- eine Haltevorrichtung, die zur Montage an dem Befestigungsabschnitt in einer vorgegebenen Position relativ zu dem Befestigungsabschnitt eingerichtet ist, und
- eine Positioniervorrichtung zur Positionierung des Befestigungselements in einer vorgegebenen Anordnung relativ zu dem Windenergieanlagenrotorblatt und/oder zur Anpassung eines Abstandshalters eines Befestigungselements an einen radialen Abstand zwischen dem Abdeckprofil und dem Windenergieanlagenrotorblatt.

Zu den Merkmalen und Vorteilen des Positionierwerkzeugs wird auf die vorstehenden Erläuterungen des Windenergieanlagenrotorblatts und des Verfahrens zu dessen Herstellung verwiesen, die entsprechend gelten.

Das Positionierwerkzeug vereinfacht die Anordnung des Befestigungselements und/oder die Anpassung des Abstandshalters in der vorgesehenen Montageposition und weist hierzu eine Haltevorrichtung und eine Positioniervorrichtung auf. Die Haltevorrichtung ist zur Befestigung an dem Befestigungsabschnitt des Rotorblatts eingerichtet, sodass das Positionierwerkzeug einfach in einer vorherbestimmten Position relativ zu dem Rotorblatt befestigt werden kann. Die Positioniervorrichtung vereinfacht die Positionierung des Befestigungselements und/oder Abstandshalters, indem sie mit dem Befestigungselement bzw. dem Abstandshalter in geeigneter Weise zusammenwirkt, insbesondere mit Hilfe eines Anschlags, einer Markierung oder einer Aufnahme.

Nach entsprechender Positionierung des Befestigungselements an der Positioniervorrichtung befindet sich das Befestigungselement automatisch in der vorgesehenen Montageposition relativ zu dem Windenergieanlagenrotorblatt. Aufwendige Mess- oder Justierschritte sind hierfür nicht erforderlich.

In einer Ausgestaltung weist die Haltevorrichtung mindestens eine Bohrung auf, die auf einen in dem Befestigungsabschnitt verankerten Befestigungsbolzen aufsetzbar ist. Beispielsweise kann die Haltevorrichtung plattenförmig mit zwei derartigen Bohrungen sein, sodass sie einfach in einer exakt vorherbestimmten Position am Befestigungsabschnitt fixiert werden kann. Bei einem kreiszylindrischen Befestigungsabschnitt ist dies in unterschiedlichen "Drehstellungen" möglich, sodass die Positioniervorrichtung an mehreren Positionen Verwendung finden kann. Stets befindet sich die Haltevorrichtung nach der Montage am Befestigungsabschnitt an einer exakt vorherbestimmten Längsposition und in einem exakt vorherbestimmten Abstand zu einer Längsachse des Windenergieanlagenrotorblatts.

In einer Ausgestaltung weist die Positioniervorrichtung einen Adapter mit einer Aufnahme für das Befestigungselement auf. Der Adapter kann auch so gestaltet sein, dass er ein Befestigungselement mit einem daran vormontierten Abstandshalter aufnehmen kann. Der Adapter ist lösbar an der Positioniervorrichtung befestigbar, insbesondere bei an dem Befestigungsabschnitt befestigter Haltevorrichtung. Insbesondere kann das in der Aufnahme gehaltene Befestigungselement und/oder der Adapter in radialer Richtung an das Windenergieanlagenrotorblatt herangeführt werden. Grundsätzlich kann das Befestigungselement auch unmittelbar in eine entsprechende Öffnung der Positioniervorrichtung eingesetzt werden. Die Verwendung eines Adapters kann die Anordnung des Befestigungselements jedoch vereinfachen. Gleichzeitig kann das Positionierwerkzeug besonders einfach von dem Windenergieanlagenrotorblatt entfernt werden, nachdem das Befestigungselement an dem Windenergieanlagenrotorblatt befestigt wurde. Hierzu kann der Adapter zunächst an dem Befestigungselement verbleiben, während die Positioniervorrichtung von dem Adapter getrennt wird. Nach dem Entfernen der Positioniervorrichtung von dem Windenergieanlagenrotorblatt kann dann der Adapter von dem Befestigungselement gelöst werden.

In einer Ausgestaltung ist die Anordnung der Positioniervorrichtung relativ zu der Haltevorrichtung einstellbar. Beispielsweise kann die Positioniervorrichtung in radialer und/oder axialer Richtung relativ zu der Haltevorrichtung verstellt und in einer gewünschten Anordnung fixiert werden, beispielsweise mittels Einstell- und/oder Klemmschrauben und/oder einer Führung. Auf diese Weise ist das Positionierwerkzeug weitgehend universell einsetzbar, wobei die sich ergebende Montageposition des Abdeckprofils beispielsweise an unterschiedlich große Rotorblattöffnungen (durch radiale Verstellung) und/oder an unterschiedliche Abstände des in der Rotorblattöffnung anzuordnenden Längsabschnitts von dem Befestigungsabschnitt (durch axiale Verstellung) angepasst werden kann.

Nachfolgend wird die Erfindung anhand eines in Figuren dargestellten Ausführungsbeispiels näher erläutert. Es zeigen:
- Fig. 1: ein erfindungsgemäßes Windenergieanlagenrotorblatt, das an einer Nabe mit Spinner montiert ist,
- Fig. 2: eine vergrößerte Darstellung des in Fig. 1 mit "A" bezeichneten Ausschnitts,
- Fig. 3: das Abdeckprofil und das Abdeckelement aus Fig. 1 mit angrenzendem Rotorblatt in einer Querschnittsdarstellung,
- Fig. 4: Abdeckprofil und Abdeckelement aus Fig. 1 in einer perspektivischen Explosionsdarstellung,
- Fig. 5: ein Positionierwerkzeug in einer perspektivischen Darstellung,
- Fig. 6 a) bis e): unterschiedliche Verfahrens schritte bei der Verwendung des Positionierwerkzeugs aus Figur 5.

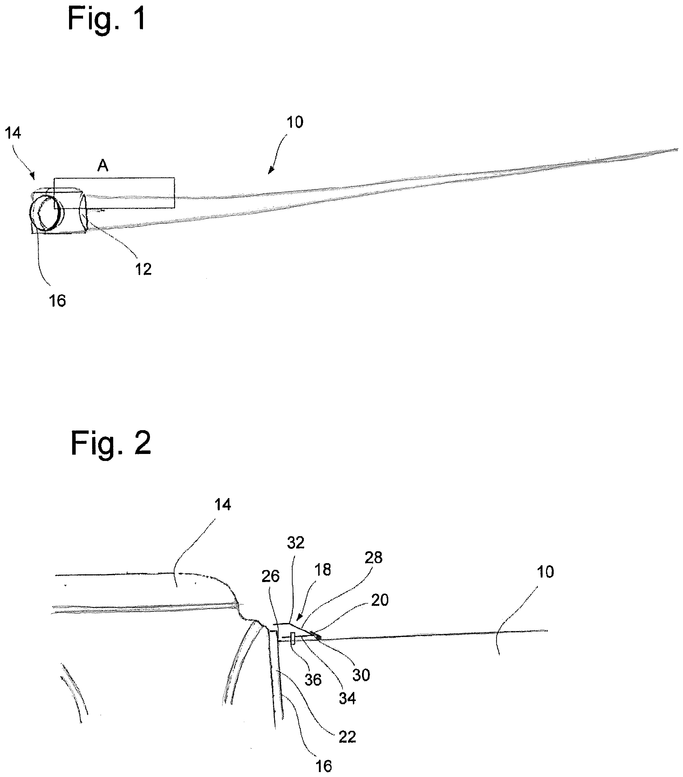

Figur 1 zeigt ein Windenergieanlagenrotorblatt 10, das an einer Rotornabe 12 befestigt ist. Die Rotornabe 12 ist zur Aufnahme zweier weiterer Windenergieanlagenrotorblätter 10 vorgesehen, d.h. für einen dreiblättrigen Rotor. Die Rotornabe 12 ist mit einem Spinner 14 verkleidet, der für jedes Windenergieanlagenrotorblatt 10 eine Rotorblattöffnung 16 aufweist. Die Rotorblattöffnungen 16 sind kreisrund.

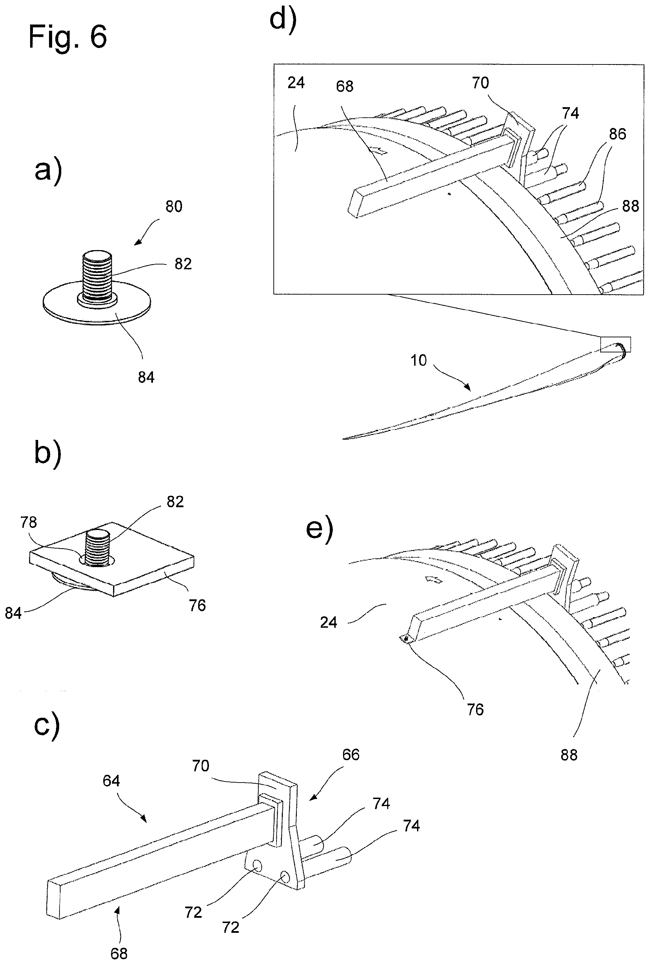

Bei der Montage eines Windenergieanlagenrotorblatts 10 an der Rotornabe 12 wird das Windenergieanlagenrotorblatt 10 mit einem in Figur 1 nicht dargestellten Befestigungsabschnitt 88 (siehe Figuren 6 d) und e)) durch die Rotorblattöffnung 16 hindurchgeführt und an der Rotornabe 12 befestigt. Die Befestigung erfolgt insbesondere an einem drehbar gelagerten Lagerring eines nicht dargestellten Pitchlagers, um eine Blatteinstellwinkelverstellung des Windenergieanlagenrotorblatts 10 zu ermöglichen.

Fig. 2 zeigt den in Fig. 1 mit "A" gekennzeichneten Ausschnitt. Zusätzlich zu den im Zusammenhang mit der Figur 1 erläuterten Elementen sind in Figur 1 ein Abdeckprofil 18 und ein Abdeckelement 20 schematisch dargestellt. Man erkennt in der Figur 2, dass der Spinner 14 einen kreiszylindrischen Abschnitt 22 aufweist, der die Rotorblattöffnung 16 bildet und das Windenergieanlagenrotorblatt 10 umschließt. Innerhalb der Rotorblattöffnung 16 ist ein Längsabschnitt 24 (siehe Figuren 6 d) und e)) des Windenergieanlagenrotorblatts 10 angeordnet. Zwischen der Rotorblattöffnung 16 und dem Längsabschnitt 24 des Windenergieanlagenrotorblatts ist ein Ringspalt 26 ausgebildet, der eine Breite von beispielsweise 100 bis 200 mm aufweist. Der Befestigungsabschnitt 88 des Windenergieanlagenrotorblatts 10 befindet sich im Inneren des Spinners 14 und ist in der Fig. 2 nicht dargestellt.

Das Abdeckprofil 18 und das Abdeckelement 20 decken den Ringspalt 26 gemeinsam ab. Hierzu weist das Abdeckprofil 18 einen konischen Abschnitt 28, einen inneren Rand 30 und einen äußeren Rand 32 auf. Der innere Rand 30 und der äußere Rand 32 sind jeweils kreisrund. An den inneren Rand 30 des konischen Abschnitts 28 schließt sich ein zum Befestigungsabschnitt hin weisender Halteabschnitt 34 an, der kreiszylindrisch ausgebildet ist. Er ist in einem Abstand von der Oberfläche des Windenergieanlagenrotorblatts 10 angeordnet und mit einem Befestigungselement 36, das diesen Abstand überbrückt, an dem Windenergieanlagenrotorblatt 10 befestigt.

Da das Windenergieanlagenrotorblatt 10 im Bereich der Rotorblattöffnung 16 nicht vollständig kreiszylindrisch ist, sondern bereits in das aerodynamische Profil des Windenergieanlagenrotorblatts 10 übergeht, variiert der radiale Abstand zwischen dem Windenergieanlagenrotorblatt 10 und dem kreisrunden inneren Rand 30 des Abdeckprofils 18 in Umfangsrichtung.

Das Abdeckelement 20 ist konisch ausgebildet und an seinem inneren Rand am Windenergieanlagenrotorblatt 10 befestigt. Es läuft ringförmig um das Windenergieanlagenrotorblatt 10 herum und befindet sich auf der vom Befestigungsabschnitt 88 abgewandten Seite des Abdeckprofils 18. Es besteht aus einem flexiblen Material, z.B. Gummi, und liegt am konischen Abschnitt 28 des Abdeckprofils 18 flächig an, sodass insbesondere ein Eindringen von am Windenergieanlagenrotorblatt 10 herunterlaufenden Wasser in den Spalt zwischen Abdeckprofil 18 und Windenergieanlagenrotorblatt 10 verhindert wird.

Das Befestigungselement 36 ist von der Innenseite des Spinners 14 aus zugänglich und selbst vom Abdeckprofil 18 und Abdeckelement 20 abgedeckt und somit vor Witterungseinflüssen geschützt.

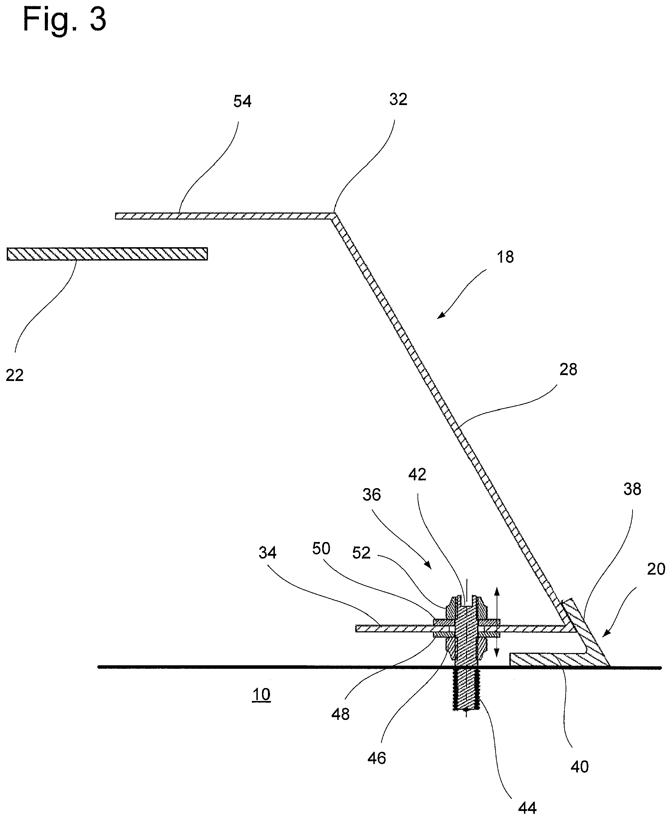

Fig. 3 zeigt das Abdeckprofil 18 mit dem Abdeckelement 20 in einer nochmals vergrößerten Querschnittsdarstellung. Man erkennt, dass das Abdeckelement 20 einen konischen Abschnitt 38 und einen sich an dessen inneren Rand anschließenden, axial ausgerichteten Abschnitt 40 aufweist. Der axial ausgerichtete Abschnitt 40 liegt an der Oberfläche des Windenergieanlagenrotorblatts 10 an und ist daher nicht vollständig kreiszylindrisch ausgebildet. Aufgrund der insgesamt relativ geringen radialen Ausdehnung des Abdeckelements 20 und einer entsprechenden Materialwahl (z.B. Gummi) kann das Abdeckelement 20 beim Befestigen am Windenergieanlagenrotorblatt 10 ohne weiteres entsprechend verformt werden.

Das Befestigungselement 36 weist einen Gewindestift 42 auf, der in eine Gewindebuchse 44 im Windenergieanlagenrotorblatt eingeschraubt ist. Ein Abstandshalter in Form einer ersten Mutter 46 ist auf den Gewindestift 42 aufgeschraubt und relativ zu der Oberfläche des Windenergieanlagenrotorblatts 10 so eingestellt, dass sie gemeinsam mit einer ersten Unterlegscheibe 48 einen Anschlag für den Halteabschnitt 34 des Abdeckprofils 18 bildet. Oberhalb des Halteabschnitts 34 befindet sich eine zweite Unterlegscheibe 50, die mit einer zweiten Mutter 52, die ebenfalls auf den Gewindestift 42 aufgeschraubt ist, gegen den Halteabschnitt 34 gepresst wird. Dadurch ist der Halteabschnitt 34 und damit das Abdeckprofil 18 in dem gewünschten radialen Abstand sicher am Windenergieanlagenrotorblatt 10 befestigt.

Wenn der Längsabschnitt des Rotorblatts 10, an welchem das Abdeckprofil 18 befestigt wird, einen kreisrunden Querschnitt aufweist, kann anstelle der Mutter 46 auch eine Hülse als Anschlag für den Halteabschnitt 34 verwendet werden. Die Höhe der Hülse ist dann für alle Gewindestifte gleich.

Man erkennt, dass der konische Abschnitt 38 des Abdeckelements 20 flächig am konischen Abschnitt 28 des Abdeckprofils 18 anliegt. An den äußeren Rand 32 des konischen Abschnitts 28 schließt sich ein kreiszylindrischer Abschnitt 54 an, der axial ausgerichtet ist und den nur schematisch angedeuteten, kreiszylindrischen Abschnitt 22 des Spinners 14 umschließt. Zum Abdichten des Spaltes zwischen dem kreiszylindrischen Abschnitt 54 des Abdeckprofils und dem Spinner können am Spinner Bürsten (nicht dargestellt) angebracht werden.

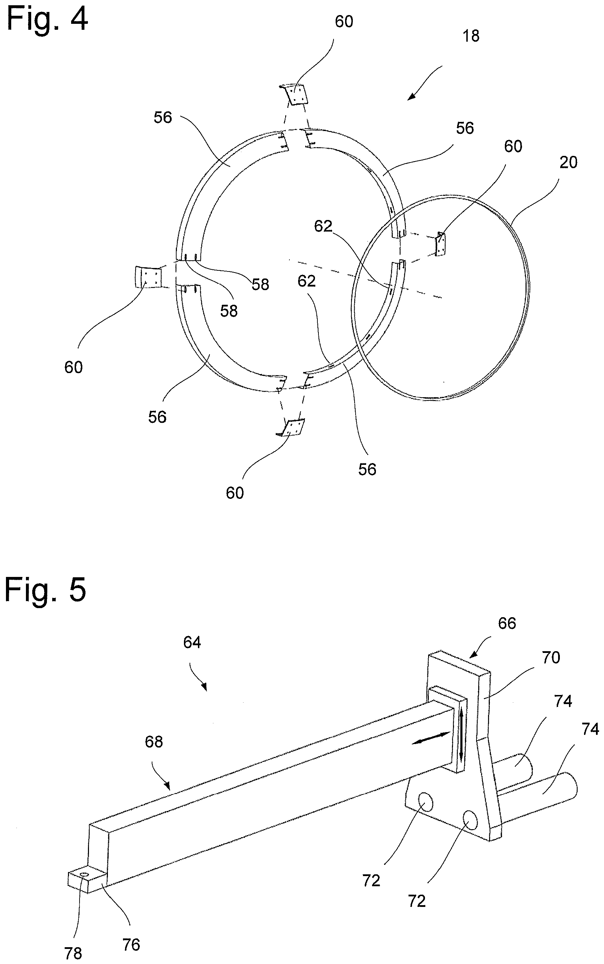

Fig. 4 zeigt das Abdeckprofil 18 mit Abdeckelement 20 in einer Explosionsdarstellung. Man erkennt, dass das Abdeckprofil 18 aus vier Kreissegmenten 56, die an ihren Enden jeweils zwei Langlöcher 58 aufweisen, zusammengesetzt wird. Dadurch kann der Umfang des Abdeckprofils 18 an die Erfordernisse angepasst werden. Die Kreissegmente 56 werden jeweils über eine Lasche 60 miteinander verbunden, wobei Schrauben durch die Langlöcher 58 hindurchgeführt und in die Laschen 60 eingeschraubt werden. Die Laschen 60 sind auf der Rückseite vorzugsweise mit Moosgummi versehen, welcher bei der Montage derart gestaucht wird, dass die Laschen 60 an den Profilen 56 abgedichtet werden. Ebenfalls gut in der Figur 4 zu erkennen sind weitere, in Umfangsrichtung ausgerichtete Langlöcher 62, die zur Aufnahme der Befestigungselemente 36 dienen. Durch die Einteilung in Kreissegmente können die Transportmaße des Abdeckprofils verringert werden.

Figur 5 zeigt ein Positionierwerkzeug 64, das zur Montage des Abdeckprofils 18 an einem Windenergieanlagenrotorblatt 10 verwendet werden kann. Das Positionierwerkzeug 64 hat eine Haltevorrichtung 66 und eine Positioniervorrichtung 68. Wie durch die Pfeile angedeutet, ist die relative Anordnung der Positioniervorrichtung 68 zu der Haltevorrichtung 66 in radialer Richtung und in axialer Richtung mit Hilfe einer Führung einstellbar.

Die Haltevorrichtung 66 weist einen plattenförmigen Abschnitt 70 mit zwei Durchgangsbohrungen 72 auf, die in axialer Richtung angeordnet sind. An die Durchgangsbohrungen 72 schließen sich zwei Halterohre 74 an, sodass die Befestigungsbolzen 86 (siehe Figuren 6 d) und e)), die aus dem Befestigungsabschnitt 88 des Windenergieanlagenrotorblatts 10 hervorstehen, durch die Durchgangsbohrungen 72 und die Halterohre 74 hindurchgeführt werden können. Am freien Ende der Positioniervorrichtung 68 ist ein Adapter 76 mit einer Aufnahme 78 für ein Befestigungselement 36 angeordnet.

Der Einsatz des Positionierwerkzeugs 64 bei der Herstellung eines Windenergieanlagenrotorblatts 10 wird anhand der Figur 6 erläutert. Figur 6a) zeigt ein Befestigungselement 80 mit einem Gewindestift 82 und einer Grundplatte 84. Anders als der Gewindestift 42 des Befestigungselements 36 aus der Figur 3 wird der Gewindestift 82 nicht in eine Öffnung im Windenergieanlagenrotorblatt 10 eingeschraubt, sondern ist fest mit der Grundplatte 84 verbunden, die auf die Oberfläche des Windenergieanlagenrotorblatts 10 aufgeklebt wird.

Wie in Fig. 6 b) gezeigt, wird hierzu das Befestigungselement 80 in die zur Aufnahme des Gewindestifts 82 passende Aufnahme 78 des Adapters 76 eingesetzt.

Im Verfahrensschritt der Fig. 6 c) wird das Positionierwerkzeug 64 zunächst durch Einstellen der axialen und radialen Position der Positioniervorrichtung 68 relativ zu der Haltevorrichtung 66 für das zu fertigende Windenergieanlagenrotorblatt 10 passend eingestellt.

Entsprechend Fig. 6d) wird das Positionierwerkzeug 64 anschließend auf zwei Befestigungsbolzen 86, die aus dem Befestigungsabschnitt 88 des Windenergieanlagenrotorblatts 10 in axialer Richtung hervorstehen, aufgesetzt. Dabei werden die Befestigungsbolzen 86 durch die Durchgangsbohrungen 72 und die Halterohre 74 der Haltevorrichtung 66 hindurchgeführt und der plattenförmige Abschnitt 70 wird bis an den Befestigungsabschnitt 88 herangeschoben. Dann befindet sich das Positionierwerkzeug 64 in einer vorgegebenen Position relativ zu dem Windenergieanlagenrotorblatt 10.

Anschließend wird, wie in der Figur 6 e) gezeigt, der Adapter 76 mit dem Befestigungselement 80 am freien Ende der Positioniervorrichtung 68 an das Positionierwerkzeug 64 angesetzt. Danach wird in den Spalt zwischen der Oberfläche des Rotorblatts und der Unterseite der Grundplatte 84 Klebstoff eingebracht. Dieser dient in diesem Ausführungsbeispiel als Abstandshalter und überbrückt die unterschiedlichen Spaltmaße. Nach dem Aushärten des Klebstoffs ist das Befestigungselement 80 exakt an der vorgesehenen Position am Windenergieanlagenrotorblatt 10 befestigt.

Alternativ können die Befestigungselemente 80 auch einheitlich mit einer dünnen Klebstoffschicht am Rotorblatt befestigt werden. Die Positionierung auf dem Rotorblatt erfolgt mit Hilfe der Positioniervorrichtung. Eine, wie in Figur 3 dargestellt, als Abstandshalter dienende Mutter 46 wird bereits vor dem Verkleben auf den Gewindestift 82 aufgeschraubt und im Adapter 76 gehalten. Die Position der Mutter 46 auf dem Gewindestift 82 wird nach dem Aushärten des Klebstoffs ebenfalls mit Hilfe des Positionierwerkzeugs 64 eingestellt.

Es versteht sich, dass die Schritte der Figuren 6 d) und e) an unterschiedlichen Positionen in Umfangsrichtung des Windenergieanlagenrotorblatts wiederholt werden können. Hierzu wird das Windenergieanlagenrotorblatt 10 bevorzugt auf einem Drehgestell gelagert.

Wie bereits erläutert, befinden sich die Befestigungselemente 36, 80 bezogen auf den Befestigungsabschnitt 88 des Windenergieanlagenrotorblatts stets an der richtigen Position, die sich bei nicht kreiszylindrischem Längsabschnitt 24 des Windenergieanlagenrotorblatts 10 in einem unterschiedlichen radialen Abstand von dessen Oberfläche befinden kann.

Es folgen Ausführungsbeispiele der Erfindung:
1. Windenergieanlagenrotorblatt 10 zur Montage an einer Rotornabe 12, die mit einem Spinner 14 verkleidet ist, der eine Rotorblattöffnung 16 aufweist, wobei das Windenergieanlagenrotorblatt 10 einen Befestigungsabschnitt 88 zur Befestigung des Windenergieanlagenrotorblatts 10 an der Rotornabe 12 und einen innerhalb der Rotorblattöffnung 16 anzuordnenden Längsabschnitt 24 umfasst, mit einem Abdeckprofil 18 zum Abdecken eines Ringspalts 26 zwischen dem Längsabschnitt 24 und der Rotorblattöffnung 16, wobei das Abdeckprofil 18 an dem Windenergieanlagenrotorblatt 10 befestigt ist und einen kreisringförmigen äußeren Rand 32 aufweist, dadurch gekennzeichnet, dass
   - das Abdeckprofil 18 einen kreisringförmigen inneren Rand 30 aufweist, der einen radialen Abstand von dem Windenergieanlagenrotorblatt 10 aufweist, und durch
   - ein ringförmiges Abdeckelement 20, das an dem Windenergieanlagenrotorblatt 10 befestigt ist und das den radialen Abstand überbrückt.
2. Windenergieanlagenrotorblatt 10 nach Ausführungsbeispiel 1, dadurch gekennzeichnet, dass der radiale Abstand in Umfangsrichtung variiert.
3. Windenergieanlagenrotorblatt 10 nach Ausführungsbeispiel 1 oder 2, dadurch gekennzeichnet, dass das Abdeckprofil 18 einen Halteabschnitt 34 aufweist, der sich vom inneren Rand 30 in Richtung zu dem Befestigungsabschnitt 88 hin erstreckt.
4. Windenergieanlagenrotorblatt 10 nach einem der Ausführungsbeispiele 1 bis 3, dadurch gekennzeichnet, dass das Abdeckprofil 18 mit einer Vielzahl von verstellbaren, an den radialen Abstand zwischen Abdeckprofil und Windenergieanlagenrotorblatt 10 anpassbaren Befestigungselementen 36, 80 an dem Windenergieanlagenrotorblatt 10 befestigt ist.
5. Windenergieanlagenrotorblatt 10 nach Ausführungsbeispiel 4, dadurch gekennzeichnet, dass die Befestigungselemente 36 jeweils einen Gewindestift 42 und einen verstellbaren Anschlag aufweisen.
6. Windenergieanlagenrotorblatt nach einem der Ausführungsbeispiele 1 bis 5, dadurch gekennzeichnet, dass das Abdeckelement 20 an dem Abdeckprofil 18 anliegt.
7. Verfahren zur Herstellung eines Windenergieanlagenrotorblatts 10 nach einem der Ausführungsbeispiele 1 bis 6, mit den folgenden Schritten:
   - Bereitstellen eines Windenergieanlagenrotorblatts 10, das zur Montage an einer Rotornabe 12, die mit einem Spinner 14 verkleidet ist, der eine Rotorblattöffnung 16 aufweist, vorgesehen ist und das einen Befestigungsabschnitt 88 zur Befestigung des Windenergieanlagenrotorblatts 10 an der Rotornabe 12 und einen innerhalb der Rotorblattöffnung 16 anzuordnenden Längsabschnitt 24 aufweist,
   - Bereitstellen eines Abdeckprofils 18 zum Abdecken eines Ringspalts 26 zwischen dem Längsabschnitt 24 und der Rotorblattöffnung 16, wobei das Abdeckprofil 18 einen kreisförmigen äußeren Rand 32 und einen kreisförmigen inneren Rand 30 aufweist, gekennzeichnet durch
   - Anordnen und Befestigen des Abdeckprofils 18 an dem Windenergieanlagenrotorblatt 10 derart, dass der innere Rand 30 einen radialen Abstand von dem Windenergieanlagenrotorblatt 10 aufweist, und
   - Anordnen und Befestigen eines Abdeckelements 20 an dem Windenergieanlagenrotorblatt 10 derart, dass das Abdeckelement 20 den radialen Abstand überbrückt.
8. Verfahren nach Ausführungsbeispiel 7, gekennzeichnet durch die weiteren Schritte:
   - Befestigen einer Vielzahl von Befestigungselementen 36, 80, die verstellbare Abstandshalter aufweisen, an dem Windenergieanlagenrotorblatt 10,
   - Anpassen der Abstandshalter an den radialen Abstand zwischen Abdeckprofil 18 und Windenergieanlagenrotorblatt 10.
9. Verfahren nach Ausführungsbeispiel 8, dadurch gekennzeichnet, dass ein Positionierwerkzeug 64 am Befestigungsabschnitt 88 ausgerichtet und/oder befestigt wird.
10. Verfahren nach Ausführungsbeispiel 9, dadurch gekennzeichnet, dass mit dem Positionierwerkzeug 64 eines der Befestigungselemente 36, 80 an dem Windenergieanlagenrotorblatt 10 positioniert und/oder einer der Abstandshalter an den radialen Abstand zwischen dem Abdeckprofil 18 und dem Windenergieanlagenrotorblatt 10 angepasst wird.
11. Verfahren nach Ausführungsbeispiel 9 oder 10, dadurch gekennzeichnet, dass das Befestigungselement 36, 80 nach der Montage des Positionierwerkzeugs 64 an dem Befestigungsabschnitt 88 in eine Aufnahme 78 des Positionierwerkzeugs 64 eingesetzt wird.
12. Verfahren nach einem der Ausführungsbeispiele 7 bis 11, dadurch gekennzeichnet, dass das Abdeckelement 20 vor einem Transport des Windenergieanlagenrotorblatts 10 zu einem Errichtungsort der Windenergieanlage an dem Windenergieanlagenrotorblatt 10 befestigt wird und das Abdeckprofil 20 danach.
13. Positionierwerkzeug 64 zur Montage eines Befestigungselements 36, 80 zur Befestigung eines Abdeckprofils 18 an einem Windenergieanlagenrotorblatt 10, insbesondere bei einem Verfahren nach einem der Ausführungsbeispiele 7 bis 12, wobei das Windenergieanlagenrotorblatt 10 einen Befestigungsabschnitt 88 zur Befestigung an einer Rotornabe 12 aufweist und das Positionierwerkzeug 64 folgendes umfasst:
   - eine Haltevorrichtung 66, die zur Befestigung an dem Befestigungsabschnitt 88 in einer vorgegebenen Position relativ zu dem Befestigungsabschnitt 88 eingerichtet ist, und
   - eine Positioniervorrichtung 68 zur Positionierung des Befestigungselements 36, 80 in einer vorgegebenen Anordnung relativ zu dem Windenergieanlagenrotorblatt 10 und/oder zur Anpassung eines Abstandhalters eines Befestigungselements 36, 80 an einen radialen Abstand zwischen dem Abdeckprofil 18 und dem Windenergieanlagenrotorblatt 10.
14. Positionierwerkzeug 64 nach Ausführungsbeispiel 13, dadurch gekennzeichnet, dass die Haltevorrichtung 66 mindestens eine Bohrung 72 aufweist, die auf einen in dem Befestigungsabschnitt 88 verankerten Befestigungsbolzen 86 aufsetzbar ist.
15. Positionierwerkzeug 64 nach Ausführungsbeispiel 13 oder 14, dadurch gekennzeichnet, dass die Positioniervorrichtung 68 einen Adapter 76 aufweist mit einer Aufnahme 78 für das Befestigungselement 36, 80, wobei der Adapter 76 lösbar an der Positioniervorrichtung 68 befestigbar ist.
16. Positionierwerkzeug 64 nach einem der Ausführungsbeispiele 13 bis 15, dadurch gekennzeichnet, dass die Anordnung der Positioniervorrichtung 68 relativ zu der Haltevorrichtung 66 einstellbar ist.

### Liste der verwendeten Bezugszeichen:

- 10: Windenergieanlagenrotorblatt
- 12: Rotornabe
- 14: Spinner
- 16: Rotorblattöffnung
- 18: Abdeckprofil
- 20: Abdeckelement
- 22: kreiszylindrischer Abschnitt
- 24: Längsabschnitt
- 26: Ringspalt
- 28: konischer Abschnitt
- 30: innerer Rand
- 32: äußerer Rand
- 34: Halteabschnitt
- 36: Befestigungselement
- 38: konischer Abschnitt
- 40: axial ausgerichteter Abschnitt
- 42: Gewindestift
- 44: Gewindebuchse
- 46: erste Mutter
- 48: erste Unterlegscheibe
- 50: zweite Unterlegscheibe
- 52: zweite Mutter
- 54: kreiszylindrischer Abschnitt
- 56: Kreissegment
- 58: Langloch
- 60: Lasche
- 62: weiteres Langloch
- 64: Positionierwerkzeug
- 66: Haltevorrichtung
- 68: Positioniervorrichtung
- 70: plattenförmiger Abschnitt
- 72: Durchgangsbohrung
- 74: Halterohr
- 76: Adapter
- 78: Aufnahme
- 80: Befestigungselement
- 82: Gewindestift
- 84: Grundplatte
- 86: Befestigungsbolzen
- 88: Befestigungsabschnitt

## Patentansprüche

1. Positionierwerkzeug (64) zur Montage eines Befestigungselements (36, 80) zur Befestigung eines Abdeckprofils (18) an einem Windenergieanlagenrotorblatt (10), wobei das Windenergieanlagenrotorblatt (10) einen Befestigungsabschnitt (88) zur Befestigung an einer Rotornabe (12) aufweist und das Positionierwerkzeug (64) folgendes umfasst:
• eine Haltevorrichtung (66), die zur Befestigung an dem Befestigungsabschnitt (88) in einer vorgegebenen Position relativ zu dem Befestigungsabschnitt (88) eingerichtet ist, und
• eine Positioniervorrichtung (68) zur Positionierung des Befestigungselements (36, 80) in einer vorgegebenen Anordnung relativ zu dem Windenergieanlagenrotorblatt (10) und/oder zur Anpassung eines Abstandhalters eines Befestigungselements (36, 80) an einen radialen Abstand zwischen dem Abdeckprofil (18) und dem Windenergieanlagenrotorblatt (10).

2. Positionierwerkzeug (64) nach Anspruch 1, **dadurch gekennzeichnet, dass** die Haltevorrichtung (66) mindestens eine Bohrung (72) aufweist, die auf einen in dem Befestigungsabschnitt (88) verankerten Befestigungsbolzen (86) aufsetzbar ist.

3. Positionierwerkzeug (64) nach Anspruch 1 oder 2, **dadurch gekennzeichnet, dass** die Positioniervorrichtung (68) einen Adapter (76) aufweist mit einer Aufnahme (78) für das Befestigungselement (36, 80), wobei der Adapter (76) lösbar an der Positioniervorrichtung (68) befestigbar ist.

4. Positionierwerkzeug (64) nach einem der Ansprüche 1 bis 3, **dadurch gekennzeichnet, dass** die Anordnung der Positioniervorrichtung (68) relativ zu der Haltevorrichtung (66) einstellbar ist.
